# EUROPÄISCHE PATENTSCHRIFT

(11) **EP 1 468 848 B1**
(45) Veröffentlichungstag und Bekanntmachung des Hinweises auf die Patenterteilung: **21.09.2005**
(21) Anmeldenummer: 04008816.3
(22) Anmeldetag: 14.04.2004
(51) Int. Cl.: B60D 1/06

(54) **Anhängerkupplung für ein Fahrzeug**
Trailer hitch
Attelage pour vehicule

(30) Priorität: 17.04.2003 DE 20306266 U
(43) Veröffentlichungstag der Anmeldung: 20.10.2004
(73) Patentinhaber: Sauermann, Hans, 85119 Ernsgaden (DE)
(72) Erfinder: Sauermann, Hans, 85119 Ernsgaden (DE)
(74) Vertreter: Witzany, Manfred

(56) Entgegenhaltungen:
- FR-A- 1 319 440
- FR-A- 1 340 713
- US-A- 2 874 976
- US-A- 3 893 713

## Beschreibung

Die Erfindung betrifft eine Anhängerkupplung für ein Fahrzeug gemäß dem Oberbegriff des Patentanspruchs 1.

Aus der DE 39 29 752 C1 ist eine Kugelkopfkupplung für Anhänger bekannt, welche eine Kalotte zum Erfassen eines Kugelkopfs aufweist. Diese Kalotte besteht aus einem festen und einem schwenkbaren Kalottenteil. In einer Verschlußlage ergänzen sich beide Kalottenteile zu einer Teilhohlkugel, die den Kugelkopf um mehr als 180° umfaßt. Die Innenwandung der Kalottenteile ist dabei an die Krümmung des Kugelkopfes angepaßt. Diese bekannte Anhängerkupplung hat sich zum Ziehen von PKW-Anhängern gut bewährt und bildet den Ausgangspunkt der vorliegenden Erfindung.

Aus der US 3 893 713 ist eine gattungsgemäße Anhängerkupplung bekannt. Diese besteht aus einer zylindrischen Aufnahme, in die der Kugelkopf einführbar ist. Die Aufnahme erfaßt dabei den Kugelkopf tangential, so daß eine linienhafte Anlage des Kugelkopfs in der Aufnahme gegeben ist.

Der Erfindung liegt die Aufgabe zugrunde, eine Anhängerkupplung der eingangs genannten Art zu schaffen, die auch bei lang andauernder Belastung durch hohe Stützlasten den Fahrkomfort nicht beeinträchtigt.

Diese Aufgabe wird erfindungsgemäß mit den Merkmalen des Patentanspruchs 1 gelöst.

Die Anhängerkupplung gemäß Anspruch 1 besteht aus einem Kugelkopf und einer diesen erfassenden Kalotte, wobei es unerheblich ist, ob der Kugelkopf zugfahrzeug- oder anhängerseitig vorgesehen ist. Eine Kugelkopfkupplung bietet gegenüber anderen Kupplungsarten den Vorteil, daß sich die Anhängerdeichsel relativ zum Zugfahrzeug um beliebige Achsen verschwenken läßt, wobei die Kupplung trotzdem praktisch spielfrei ausgeführt werden kann. Bei hohen Stützlasten, insbesondere im LKW- und Traktorenbereich ergibt sich jedoch das Problem, daß sich die Kalotte im Betrieb abnützt, so daß zwischen der Kalotte und dem Kugelkopf mit der Zeit ein nicht mehr tolerierbares Spiel entsteht. Da sich bei einer sphärischen Kalotte deren Innenfläche allseitig abnützt, ist auch ein Nachstellen dieses Spiels nicht möglich. Zur Vermeidung dieses Nachteils wird die Kalotte erfindungsgemäß mit ebenen Anlageflächen für den Kugelkopf ausgebildet. Damit erfaßt der Kugelkopf diese Anlageflächen ausschließlich tangential und punktförmig. Durch Verschleiß während des Betriebs arbeitet sich der Kugelkopf an den Anlageflächen in die Kalotte ein, so daß der Kugelkopf tiefer in die Kalotte eindringt. Im Gegensatz zu einer sphärisch gekrümmten, an den Kugelkopf angepaßten Kalotte kann das durch den Verschleiß entstehende Spiel sehr einfach durch Nachstellen des verstellbaren Kalottenteils ausgeglichen werden. Damit ist selbst unter hohen Belastungen über lange Zeit ein spielfreies Kuppeln gewährleistet, so daß der Fahrkomfort nicht durch ein verschleißbedingtes Kupplungsspiel beeinträchtigt wird. Die Anlageflächen sind beidseits einer Längsachse der Anhängerkupplung vorgesehen, so daß sich eine stabile Arretierung des Kugelkopfes gegenüber seitlich wirkenden Kräften ergibt. Trotzdem ist die Verschwenkbarkeit des Kugelkopfes um dessen Mittelpunkt gewährleistet. Vorzugsweise erfassen die Anlageflächen den Kugelkopf im feststehenden Kalottenteil an mindestens vier Punkten und im verstellbaren Kalottenteil an mindestens zwei Punkten.

Zur Erzielung eines möglichst einfachen Aufbaus der Kalotte ist es gemäß Anspruch 2 zweckmäßig, wenigstens einen Kalottenteil feststehend auszubilden. Vorzugsweise umfaßt dieser Kalottenteil den Kugelkopf um etwas weniger als 180°, so daß ein einfaches An- und Abkuppeln gewährleistet ist. Zur einwandfreien Arretierung des Kugelkopfes ist ein weiterer Kalottenteil verstellbar in der Anhängerkupplung gehalten. Um zu verhindern, daß negative Stützlasten direkt auf den Verstellmechanismus des verstellbaren Kalottenteils einwirken, weist der feststehende Kalottenteil eine stirnseitige Anlagefläche auf, welche zum verstellbaren Kalottenteil hin zum Kugelkopf geneigt ist. Durch diese besondere Ausbildung der stirnseitigen Anlagefläche wird erreicht, daß diese den Kugelkopf bei auftretenden negativen Stützlasten in den feststehenden Kalottenteil drückt. Damit muß der Verstellmechanismus des verstellbaren Kalottenteils nur einen Teil der negativen Stützlasten des Kugelkopfs aufnehmen.

Vorzugsweise ist der Kugelkopf mit einer härteren Oberfläche als die Kalotte ausgebildet, so daß der Kugelkopf im Betrieb seine runde Form behält. Der Verschleiß erfolgt dabei im wesentlichen nur an den Anlageflächen der Kalotte, in die sich der Kugelkopf allmählich hineinarbeitet. Damit der dabei entstehende Abrieb sowie in die Kupplung eindringender Schmutz die Funktion der Anhängerkupplung nicht beeinträchtigt, ist es gemäß Anspruch 3 vorteilhaft, wenn in der Kalotte unterhalb des Kugelkopfs ein Aufnahmeraum vorgesehen ist. Die Bodenfläche dieses Aufnahmeraums ist dabei von der Oberfläche des Kugelkopfs beabstandet, so daß sich der Abrieb leicht in diesem Aufnahmeraum sammeln kann, ohne die Funktion der Anhängerkupplung zu beeinträchtigen.

Zur Verringerung der Reibung zwischen dem Kugelkopf und der Kalotte ist es gemäß Anspruch 4 günstig, wenn die Anlageflächen mit Nuten zur Aufnahme eines Schmiermittels versehen sind. Als Schmiermittel wird vorzugsweise ein zähes Fett eingesetzt.

Durch die vorbeschriebene Ausbildung der Kalotte ergibt sich eine einfache Nachstellbarkeit der Kalotte bei auftretendem Verschleiß. Diese Nachstellung kann beispielsweise durch eine exzentrische Aufhängung des verstellbaren Kalottenteils von Hand erfolgen. Günstiger ist es, wenn der verschwenkbare Kalottenteil gemäß Anspruch 5 mit einem verschwenkbaren Sperrhebel zusammenwirkt, der mit einer Exzenterfläche gegen den verschwenkbaren Kalottenteil drückt. Diese Exzenterfläche sorgt beim Schließvorgang der Kalotte für eine kontinuierliche Schwenkbewegung des verschwenkbaren Kalottenteils gegen den Kugelkopf, bis beide aneinander zur Anlage kommen. In dieser Lage wird der verschwenkbare Sperrhebel arretiert, so daß ohne manuelle Justierung eine spielfreie Anpassung zwischen dem Kupplungskopf und der Kalotte sichergestellt ist. Um den Sperrhebel in seiner Sperrlage zu arretieren, wirkt dieser mit einem Lösehebel zusammen, der den Sperrhebel arretieren bzw. verschwenken kann.

Zur Erzielung einer zusätzlichen Sicherung der Anhängerkupplung in der Kuppelstellung ist es gemäß Anspruch 6 günstig, wenn der Lösehebel eine Sperrfläche aufweist, die in der Kuppelstellung gegen eine Anschlagfläche des Sperrhebels gerichtet ist. Mit Hilfe dieser Sperrfläche verhindert der Lösehebel eine Verschwenkung des Sperrhebels und damit des schwenkbaren Kalottenteils. Damit ist eine zweite, unabhängige Sicherung der Anhängerkupplung in der Kuppelstellung gegeben, wodurch der Fahrbetrieb selbst dann sicher ist, wenn der Mechanismus zur Verstellung des verschwenkbaren Kalottenteils defekt, insbesondere gebrochen ist.

Zur Erzielung einer möglichst zuverlässigen zusätzlichen Sicherung des Sperrhebels in der Kuppelstellung ist es gemäß Anspruch 7 vorteilhaft, wenn die Sperrfläche bzw. die Anschlagfläche in etwa tangential zur Schwenkachse des Lösehebels ausgerichtet sind. Damit übt der Kugelkopf über den verschwenkbaren Kalottenteil keinerlei Schwenkkraft auf den Lösehebel aus, so daß dieser in seiner Sperrlage verbleibt.

Eine besonders wirkungsvolle Ausbildung des Sperrhebels ergibt sich aus Anspruch 8. Dabei besteht der Sperrhebel aus zwei Wangen, die jeweils die Exzenterfläche zur Betätigung des verschwenkbaren Kalottenteils aufweisen. Diese Wangen sind durch Brücken verbunden, von denen eine die Anschlagfläche für den Lösehebel und die andere einen Mitnehmer zur Verschwenkung des Sperrhebels trägt. Diese beiden Brücken wirken jeweils mit dem Lösehebel zusammen. Auf diese Weise ergibt sich ein besonders kompakter Aufbau des Verstellmechanismus des verschwenkbaren Kalottenteils.

Schließlich ist es gemäß Anspruch 9 vorteilhaft, wenn der Kugelkopf einen Königszapfen für einen Sattelauflieger bildet. Bei einem Sattelauflieger wirkt sich ein Kupplungsspiel besonders unangenehm auf die Fahreigenschaften des Zugfahrzeugs aus, da dieser die Kupplung mit besonders hoher Stützlast belastet.

Der Erfindungsgegenstand wird beispielhaft anhand der Zeichnung erläutert, ohne den Schutzumfang zu beschränken.

Es zeigt:
- Figur 1: eine Schnittdarstellung einer Anhängerkupplung in Explosionsdarstellung,
- Figur 2: eine räumliche Darstellung des feststehenden Kalottenteils und
- Figur 3: eine räumliche Darstellung des verschwenkbaren Kalottenteils.

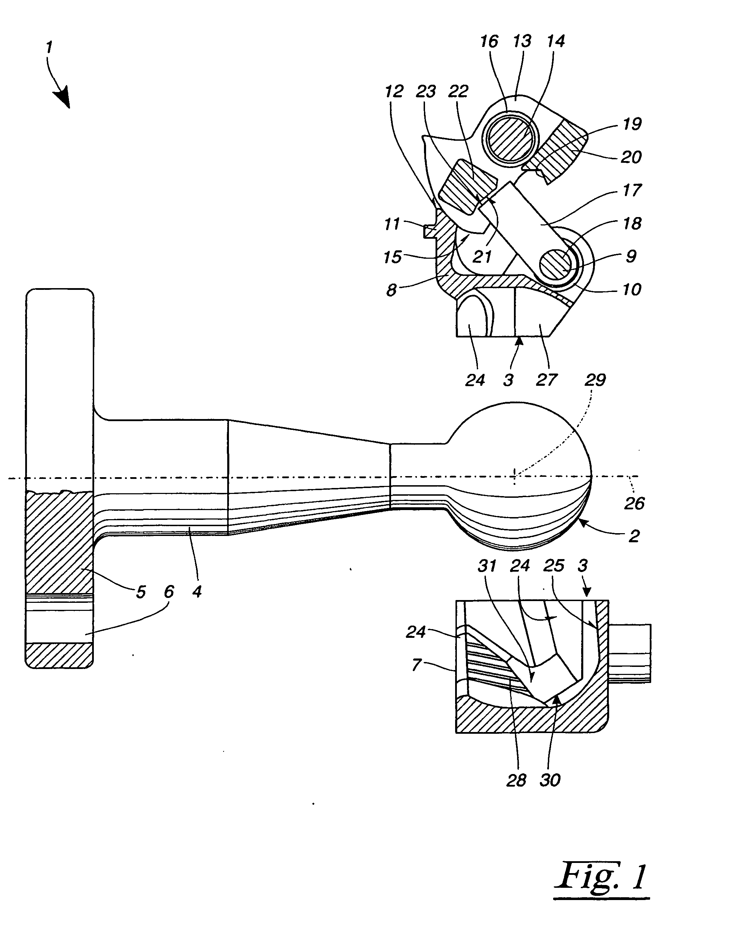

Figur 1 zeigt eine Schnittdarstellung einer Anhängerkupplung 1. Die Anhängerkupplung 1 wird von einem Kugelkopf 2. und einer diesen außenseitig umfassenden Kalotte 3 gebildet. Zur besseren Sichtbarkeit ist die Kalotte 3 getrennt vom Kugelkopf 2 in Explosionsdarstellung gezeichnet.

Der Kugelkopf 2 ist an einem Schaft 4 angeformt, der im wesentlichen rotationssymmetrisch ausgebildet ist. Der Schaft 4 endet in einer einstückig daran gehaltenen Befestigungsplatte 5, in der Bohrungen 6 zur Aufnahme von nicht dargestellten Haltemitteln vorgesehen sind. Die Befestigungsplatte 5 ist vorzugsweise mit einer nicht dargestellten Anhängerdeichsel verbunden. Alternativ könnte die Befestigungsplatte 5 auch an einem Zugfahrzeug, insbesondere einem Sattelschlepper, gehalten sein.

Die Kalotte 3 wird von zwei Teilen 7, 8 gebildet, von denen der Teil 7 fest in einem nicht dargestellten Gehäuse abgestützt ist. Der Teil 8 ist dagegen über eine Achse 9 verschwenkbar im gleichen Gehäuse abgestützt. Am verschwenkbaren Kalottenteil 8 greift eine Feder 10 an, die das Kalottenteil 8 im Uhrzeigersinn in Richtung einer Öffnungslage vorspannt. In dieser Öffnungslage kann der Kugelkopf 2 einfach in die Kalotte 3 eingeführt werden.

Am verschwenkbaren Kalottenteil 9 ist ein Arm 11 angeformt, dessen freies Ende 12 mit einem Sperrhebel 13 zusammenwirkt. Der Sperrhebel 13 ist an einer Achse 14 verschwenkbar im Gehäuse abgestützt. Er weist eine Exzenterfläche 15 auf, deren radialer Abstand von der Achse 14 gegen den Uhrzeigersinn zunimmt. Durch Verschwenken des Sperrhebels 13 im Uhrzeigersinn wird der verschwenkbare Kalottenteil 8 an seinem Arm 11 weggedrückt, so daß sich der verschwenkbare Kalottenteil 8 entgegen dem Uhrzeigersinn verschwenkt. Der verschwenkbare Kalottenteil 8 wird dabei gegen den Kugelkopf 2 gedrückt.

Der Sperrhebel 13 ist von einer weiteren Feder 16 im Uhrzeigersinn, also in Richtung der dargestellten Sperrstellung vorgespannt.

Zur Betätigung des Sperrhebels 13 weist die Anhängerkupplung 1 einen Lösehebel 17 auf, der um eine Welle 18 verschwenkbar im Gehäuse abgestützt ist. Auf dieser Welle 18 greift eine Handhabe und/oder ein Betätigungsglied in Form eines Bowdenzuges bzw. eines hydraulischen oder pneumatischen Antriebes an. Durch Verschwenken der Welle 18 im Uhrzeigersinn wird der Lösehebel 17 gegen einen Mitnehmer 19 des Sperrhebels 13 gedrückt. Dieser Mitnehmer 19 ist an einer Brücke 20 des Sperrhebels 13 angeformt. Dieser Mitnehmer 19 überträgt die Schwenkbewegung des Lösehebels 17 auf den Sperrhebel 13, um diesen in die nicht dargestellte Öffnungsstellung zu bringen. In dieser Öffnungsstellung ist der verschwenkbare Kalottenteil 8 frei und durch die Spannung der Feder 10 in eine öffnende Lage verschwenkt.

Zum Überführen der Anhängerkupplung 1 in die in Figur 1 dargestellte Kuppelstellung wird der Lösehebel 17 in die dargestellte Lage verschwenkt, wodurch die Feder 16 den Sperrhebel 13 im Uhrzeigersinn verschwenkt. Dabei drückt die Exzenterfläche 15 gegen den Arm 11 des verschwenkbaren Kalottenteils 8, die damit gegen den Kupplungskopf 2 gedrückt wird. Der Lösehebel 17 wird weiter verschwenkt, bis er die in Figur 1 dargestellte Endlage erreicht hat, in der er einer Anschlagfläche 21 des Sperrhebels 13 gegenüberliegt. Diese Anschlagfläche 21 ist an einer weiteren Brücke 22 des Sperrhebels 13 vorgesehen. Der Lösehebel 17 besitzt eine in dieser Stellung gegen die Anschlagfläche 21 gerichtete Sperrfläche 23, die eine Verschwenkung des Sperrhebels 13 in dessen Lösestellung verhindert. Damit ist sichergestellt, daß die Anhängerkupplung 1 nur durch Überführen des Lösehebels 17 in die Lösestellung geöffnet werden kann.

Um zu verhindern, daß durch Verschleißerscheinungen zwischen dem Kugelkopf 2 und der Kalotte 3 ein nicht ausgleichbares Spiel entsteht, ist die Kalotte 3 nicht an die Form des Kugelkopfs 2 angepaßt. Die Kalotte 3 weist vielmehr eben ausgebildete Anlageflächen 24 auf, welche tangential zum Kugelkopf 2 ausgerichtet sind. Diese Anlageflächen 24 befinden sich in Richtung der Längsachse 26 der Anhängerkupplung 1 betrachtet, links oberhalb, rechts oberhalb, links unterhalb und rechts unterhalb der Längsachse 26. Zusätzlich weist der feste Kalottenteil 7 eine stirnseitige Anlagefläche 25 auf, welche in Richtung des verschwenkbaren Kalottenteils 8 zum Kugelkopf 2 hin geneigt ist. Diese geringfügige Neigung sorgt für ein festes Einpressen des Kugelkopfs 2 in den festen Kalottenteil 7, so daß negative Stützlasten vom verschwenkbaren Kalottenteil 8 ferngehalten werden. Am verschwenkbaren Kalottenteil 8 ist stirnseitig eine weitere Anlagefläche 27 vorgesehen, die im Ausführungsbeispiel gemäß Figur 1 gekrümmt ausgebildet ist. Die Krümmung dieser Anlagefläche 27 ist etwas kleiner als die Krümmung des Kugelkopfes 2, so daß alle Anlageflächen 24, 25, 27 den Kugelkopf 2 tangential erfassen. In einer der Anlageflächen 24 sind Nuten 28 angedeutet, die zur Aufnahme eines Schmiermittels dienen. Derartige Nuten 28 sind in allen Anlageflächen 24, 25, 27 vorgesehen.

Im festen Kalottenteil 7 ist unterhalb des Mittelpunktes 29 des Kugelkopfes 2 zwischen den Anlageflächen 24, 25 ein Aufnahmeraum 30 für in die Kupplung eindringenden Schmutz sowie verschleißbedingten Abrieb vorgesehen. Eine Bodenfläche 31 dieses Aufnahmeraums 30 ist dabei vom Kugelkopf 2 ausreichend weit beabstandet, damit Metallabrieb in diesem Aufnahmeraum 30 Platz findet, ohne die Funktion der Anhängerkupplung 1 zu beeinträchtigen. Dies gewährleistet eine lange Betriebsdauer der Anhängerkupplung 1. Der Metallabrieb kommt dabei insbesondere von den Anlageflächen 24, 25, 27, da diese in der Regel weicher ausgebildet werden als der Kugelkopf 2.

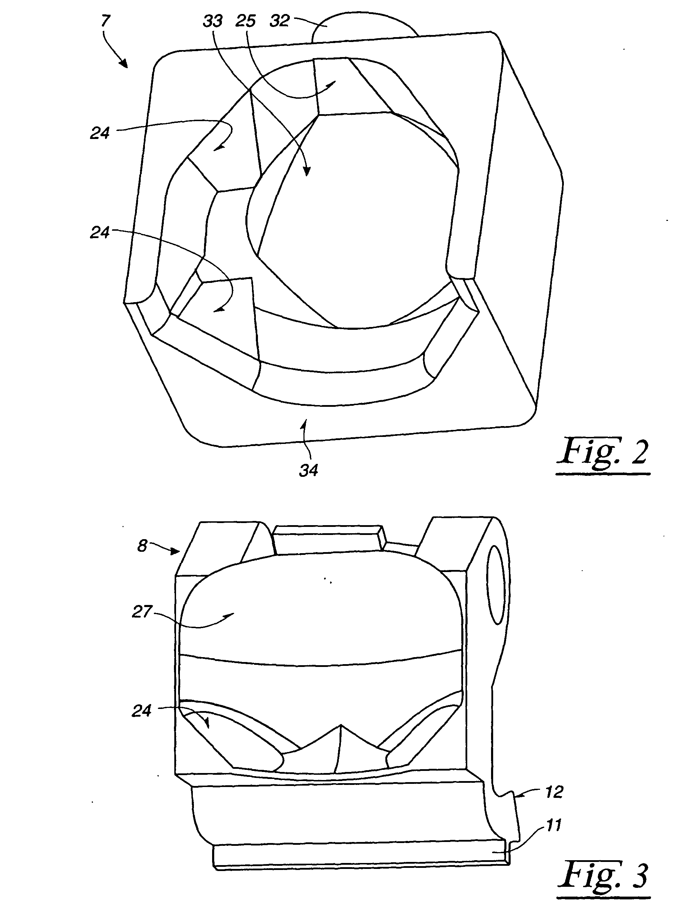

Die Figur 2 zeigt eine räumliche Darstellung des festen Kalottenabschnitts 7. Dieser feste Kalottenabschnitt 7 weist einen Schaft 32 auf, mit dessen Hilfe der Kalottenabschnitt 7 im Gehäuse der Anhängerkupplung 1 festgelegt ist. Der feste Kalottenabschnitt 7 ist im wesentlichen blockförmig ausgebildet und weist eine oben offene Ausnehmung 33 für den Kugelkopf 2 auf. Um dem Schaft 4 des Kugelkopfs 2 eine ausreichende Schwenkbewegungsfreiheit zu geben, ist der feste Kalottenteil 7 an einer Frontfläche 34 in etwa teilkreisförmig ausgenommen. Innerhalb des festen Kalottenteils 7 sind vier bodenseitige Anlageflächen 24 eingeformt, von denen nur zwei sichtbar sind. Zusätzlich ist im Bereich des Schaftes 32 die stirnseitige Anlagefläche 25 vorgesehen. Die Anlageflächen 24, 25 sind zur besseren Erkennbarkeit schattiert dargestellt.

Figur 3 zeigt eine räumliche Darstellung des verschwenkbaren Kalottenteils 8. Aus dieser Darstellung ist insbesondere zu ersehen, daß sich der Arm 11 über die gesamte Breite des Kalottenteils 8 erstreckt. Alternativ wäre es auch denkbar, den Arm 11 nur im Bereich der Exzenterflächen 15 des Sperrhebels 13 auszubilden. Im verschwenkbaren Kalottenteil 8 sind die Anlageflächen 24, 27 vorgesehen, die zur oberseitigen Erfassung des Kugelkopfs 2 dienen.

### Bezugszeichenliste

- 1: Anhängerkupplung
- 2: Kugelkopf
- 3: Kalotte
- 4: Schaft
- 5: Befestigungsplatte
- 6: Bohrung
- 7: fester Kalottenteil
- 8: verschwenkbarer Kalottenteil
- 9: Achse
- 10: Feder
- 11: Arm
- 12: freies Ende
- 13: Sperrhebel
- 14: Achse
- 15: Exzenterfläche
- 16: Feder
- 17: Lösehebel
- 18: Welle
- 19: Mitnehmer
- 20: Brücke
- 21: Anschlagfläche
- 22: Brücke
- 23: Sperrfläche
- 24, 25: Anlagefläche
- 26: Längsachse
- 27: Anlagefläche
- 28: Nut
- 29: Mittelpunkt
- 30: Aufnahmeraum

- 31: Bodenfläche
- 32: Schaft
- 33: Ausnehmung
- 34: Frontfläche

## Patentansprüche

1. Anhängerkupplung für ein Fahrzeug, wobei die Anhängerkupplung einen Kugelkopf (2) und eine diesen erfassende Kalotte (3) aufweist, welche von mindestens zwei gegeneinander verstellbaren Kalottenteilen (7, 8) gebildet ist, wobei die Kalotte (3) Anlageflächen (24, 25, 27) aufweist, die eine sphärische Oberfläche des Kugelkopfs (2) tangential erfassen, **dadurch gekennzeichnet, daß** die Anlageflächen (24, 25, 27) zumindest im Anlagebereich des Kugelkopfes (2) im wesentlichen eben ausgebildet sind und mit der Vertikalen spitze Winkel einschließen und in Fahrzeuglängsrichtung gesehen, beidseits einer Längsachse (26) der Anhängerkupplung (1) vorgesehen sind.

2. Anhängerkupplung nach Anspruch 1, **dadurch gekennzeichnet, daß** mindestens einer der Kalottenteile (7) feststehend ausgebildet ist und zur Anlage des freien Endbereichs des Kugelkopfs (2) eine stirnseitige Anlagefläche (25) aufweist, welche zum verstellbaren Kalottenteil (8) hin zum Kugelkopf (2) geneigt ist.

3. Anhängerkupplung nach Anspruch 1 oder 2, **dadurch gekennzeichnet, daß** in der Kalotte (3) unterhalb des Kugelkopfs (2) ein Aufnahmeraum (30) vorgesehen ist, dessen Bodenfläche (31) von der Oberfläche des Kugelkopfs (2) beabstandet ist.

4. Anhängerkupplung nach mindestens einem der Ansprüche 1 bis 3, **dadurch gekennzeichnet, daß** mindestens eine der Anlageflächen (24, 25, 27) mit Nuten (28) zur Aufnahme eines Schmiermittels versehen ist.

5. Anhängerkupplung nach mindestens einem der Ansprüche 1 bis 4, wobei mindestens einer der Kalottenteile (8) verschwenkbar in der Anhängerkupplung (1) abgestützt ist, **dadurch gekennzeichnet, daß** der verschwenkbare Kalottenteil (8) mit einem verschwenkbaren Sperrhebel (13) zusammenwirkt, der mit einer Exzenterfläche (15) gegen den verschwenkbaren Kalottenteil (8) drückt, wobei der Sperrhebel (13) durch einen Lösehebel (17) arretierbar und verschwenkbar ist.

6. Anhängerkupplung nach Anspruch 5, **dadurch gekennzeichnet, daß** der Lösehebel (17) eine Sperrfläche (23) aufweist, die in der Kuppelstellung der Anhängerkupplung (1) gegen eine Anschlagfläche (21) des Sperrhebels (13) gerichtet ist, um dessen Verschwenkung in eine den schwenkbaren Kalottenteil (8) freigebenden Lösestellung zu verhindern.

7. Anhängerkupplung nach Anspruch 6, **dadurch gekennzeichnet, daß** die Sperrfläche (23) und/oder die Anschlagfläche (21) in etwa tangential zu einer Schwenkachse (18) des Lösehebels (17) ausgerichtet ist/sind.

8. Anhängerkupplung nach Anspruch 6 oder 7, **dadurch gekennzeichnet, daß** der Sperrhebel (13) mindestens zwei Wangen aufweist, die jeweils die Exzenterfläche (15) aufweisen, wobei die Wangen durch Brücken (20, 22) verbunden sind, von denen eine die Anschlagfläche (21) für den Lösehebel (17) und die andere einen Mitnehmer (19) zur Verschwenkung des Sperrhebels (13) durch den Lösehebel (17) trägt.

9. Anhängerkupplung nach mindestens einem der Ansprüche 1 bis 8 oder nach dem Oberbegriff des Anspruchs 1, **dadurch gekennzeichnet, daß** der Kugelkopf (2) einen Königszapfen für einen Sattelauflieger bildet.

## Claims

1. Trailer hitch for a vehicle, the trailer hitch having a spherical head (2) and a spherical cap (3) which grasps the latter and is formed by at least two spherical-cap parts (7, 8) which can be displaced in relation to each other, the spherical cap (3) having bearing surfaces (24, 25, 27) which tangentially grasp a spherical surface of the spherical head (2), **characterized in that** the bearing surfaces (24, 25, 27) are of substantially planar design at least in the bearing region of the spherical head (2) and enclose acute angles with the vertical and, as seen in the longitudinal direction of the vehicle, are provided on both sides of a longitudinal axis (26) of the trailer hitch (1).

2. Trailer hitch according to Claim 1, **characterized in that** at least one of the spherical-cap parts (7) is of fixed design and, for the bearing of the free end region of the spherical head (2), has an end-side bearing surface (25) which is inclined towards the displaceable spherical-cap part (8) for the spherical head (2).

3. Trailer hitch according to Claim 1 or 2, **characterized in that** a receiving space (30) is provided in the spherical cap (3) below the spherical head (2), the bottom surface (31) of which receiving space is spaced apart from the surface of the spherical head (2).

4. Trailer hitch according to at least one of Claims 1 to 3, **characterized in that** at least one of the bearing surfaces (24, 25, 27) is provided with grooves (28) for receiving a lubricant.

5. Trailer hitch according to at least one of Claims 1 to 4, at least one of the spherical-cap parts (8) being pivotably supported in the trailer hitch (1), **characterized in that** the pivotable spherical-cap part (8) interacts with a pivotable locking lever (13) which presses with an eccentric surface (15) against the pivotable spherical-cap part (8), the locking lever (13) being lockable and pivotable by means of a release lever (17).

6. Trailer hitch according to Claim 5, **characterized in that** the release lever (17) has a locking surface (23), which, in the coupling position of the trailer hitch (1), is directed against a stop surface (21) of the locking lever (13) in order to prevent the pivoting thereof into a release position releasing the pivotable spherical-cap part (8).

7. Trailer hitch according to Claim 6, **characterized in that** the locking surface (23) and/or the stop surface (21) is/are oriented approximately tangentially to a pivot axis (18) of the release lever (17).

8. Trailer hitch according to Claim 6 or 7, **characterized in that** the locking lever (13) has at least two cheeks which each have the eccentric surface (15), the cheeks being connected by bridges (20, 22), of which one bears the stop surface (21) for the release lever (17) and the other bears a driver (19) for pivoting the locking lever (13) by means of the release lever (17).

9. Trailer hitch according to at least one of Claims 1 to 8 or according to the precharacterizing clause of Claim 1, **characterized in that** the spherical head (2) forms a kingpin for a semitrailer.

## Revendications

1. Attelage de remorque pour un véhicule, l'attelage de remorque présentant une rotule (2) et une calotte (3) recevant celle-ci, laquelle est constituée d'au moins deux parties de calotte (7, 8) déplaçables l'une par rapport à l'autre, la calotte (3) présentant des surfaces d'appui (24, 25, 27) qui reçoivent tangentiellement une surface sphérique de la rotule (2), **caractérisée en ce que** les surfaces d'appui (24, 25, 27) au moins dans la zone d'appui de la rotule (2) sont réalisées de manière essentiellement plane et forment des angles aigus avec la verticale et, vues dans la direction longitudinale du véhicule, sont prévues de part et d'autre d'un axe longitudinal (26) de l'attelage de remorque (1).

2. Attelage de remorque selon la revendication 1, **caractérisée en ce qu'**au moins l'une des parties de calotte (7) est réalisée fixe et présente, pour l'appui de la partie d'extrémité libre de la rotule (2), une surface d'appui frontale (25) qui est inclinée en direction de la partie de calotte (8) déplaçable par rapport à la rotule (2).

3. Attelage de remorque selon la revendication 1 ou 2, **caractérisée en ce que** dans la calotte (3) est prévu un espace de logement (30) en dessous de la rotule (2), dont la surface de fond (31) est distante de la surface de la rotule (2).

4. Attelage de remorque selon l'une au moins des revendications 1 à 3, **caractérisée en ce qu'**au moins l'une des surfaces d'appui (24, 25, 27) est pourvue de rainures (28) pour recevoir un lubrifiant.

5. Attelage de remorque selon l'une au moins des revendications 1 à 4, dans laquelle au moins l'une des parties de calotte (8) est supportée de manière pivotante dans l'attelage de remorque (1), **caractérisée en ce que** la partie de calotte (8) pivotante coopère avec un levier de blocage (13) pivotant qui exerce une pression contre la partie de calotte (8) pivotante par une surface excentrique (15), le levier de blocage (13) pouvant être bloqué et pivoté par un levier de déblocage (17).

6. Attelage de remorque selon la revendication 5, **caractérisée en ce que** le levier de déblocage (17) présente une surface de blocage (23) qui, dans la position attelée de l'attelage de remorque (1), est orientée vers une surface de butée (21) du levier de blocage (13), afin d'empêcher son pivotement dans une position de déblocage libérant la partie de calotte (8) pivotante.

7. Attelage de remorque selon la revendication 6, **caractérisée en ce que** la surface de blocage (23) et/ou la surface de butée (21) est/sont orientées de manière sensiblement tangentielle par rapport à un axe de pivotement (18) du levier de déblocage (17).

8. Attelage de remorque selon la revendication 6 ou 7, **caractérisée en ce que** le levier de blocage (13) présente au moins deux joues qui présentent chacune la surface excentrique (15), les joues étant reliées par des ponts (20, 22) dont l'un porte la surface de butée (21) pour le levier de déblocage (17) et l'autre un ergot d'entraînement (19) pour le pivotement du levier de blocage (13) par l'intermédiaire du levier de déblocage (17).

9. Attelage de remorque selon l'une au moins des revendications 1 à 8 ou selon le préambule de la revendication 1, **caractérisée en ce que** la rotule (2) forme un pivot central pour une semi-remorque.
